# EUROPEAN PATENT APPLICATION

(11) **EP 4 290 911 A1**
(43) Date of publication of application: **13.12.2023**
(21) Application number: 22749747.6
(22) Date of filing: 02.02.2022
(51) Int. Cl.: H04W 16/28, H04W 28/16

(54) **TERMINAL, WIRELESS COMMUNICATION METHOD, AND BASE STATION**

(30) Priority: 05.02.2021 JP 2021017791
(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP)
(74) Representative: Hoffmann Eitle
(86) International application number: PCT/JP2022/004067
(87) International publication number: WO 2022/168876

(57) **Abstract**

It is possible to appropriately perform transmission and/or reception of a non-serving cell. A terminal according to one aspect of the present disclosure includes: a transmitting section that transmits information related to a plurality of cell radio network temporary identifiers (C-RNTIs); and a control section that controls transmission and/or reception using the plurality of C-RNTIs.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency and so on (see Non-Patent Literature 1). In addition, for the purpose of further high capacity, advancement and the like of the LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

Layer-1/layer-2 (layer 1/ layer 2 (L1/L2)) inter-cell mobility to facilitate DL/UL beam management that is more efficient (achieves lower latency and overhead) in future radio communication systems (e.g., NR) is under study.

In L1/L2 inter-cell mobility, serving cell change is possible by using a function such as beam control without Radio Resource Control (RRC) reconfiguration. In other words, transmission and/or reception with a non-serving cell is possible without handover. For handover, RRC reconnection is needed, for example, which causes a data communication unavailable period. Hence, L1/L2 inter-cell mobility with no need of handover is preferable.

However, a cell radio network temporary identifier (C-RNTI) used in the serving cell may not be able to be used directly for transmission and/or reception with a non-serving cell. This is because, for example, the C-RNTI used in the serving cell may be already used for another user terminal (User Equipment (UE)) in a non-serving cell. If the same C-RNTI is used for UEs in the same cell, this causes a problem that one of the UEs can read downlink control information for the other UE in error, for example.

Thus, an object of the present disclosure is to provide a terminal, a radio communication method, and a base station that allow transmission and/or reception of a non-serving cell to be appropriately performed. Solution to Problem

A terminal according to one aspect of the present disclosure includes: a transmitting section that transmits information related to a plurality of cell radio network temporary identifiers (C-RNTIs); and a control section that controls transmission and/or reception using the plurality of C-RNTIs.

### Advantageous Effects of Invention

According to one aspect of the present disclosure, it is possible to appropriately perform transmission and/or reception of a non-serving cell.

### Brief Description of Drawings

FIGS. 1A to 1D are diagrams to show examples of a multi-TRP scenario;
FIG. 2A is a diagram to show an example of an intra-cell TRP; FIG. 2B is a diagram to show an example of an inter-TRP;
FIGS. 3A and 3B are diagrams to show examples of an RRC configuration of associations between QCL source RSs and non-serving cell RSs;
FIG. 4 is a diagram to show an example of a schematic structure of a radio communication system according to one embodiment;
FIG. 5 is a diagram to show an example of a structure of a base station according to one embodiment;
FIG. 6 is a diagram to show an example of a structure of a user terminal according to one embodiment; and
FIG. 7 is a diagram to show an example of a hardware structure of the base station and the user terminal according to one embodiment.

### Description of Embodiments

### (TCI, Spatial Relation, QCL)

For NR, control of reception processing (for example, at least one of reception, demapping, demodulation, and decoding) and transmission processing (for example, at least one of transmission, mapping, precoding, modulation, and coding) of at least one of a signal and a channel (referred to as a signal/channel) in a user terminal (User Equipment (UE)), based on a transmission configuration indication state (TCI state) has been under study.

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a given signal/channel and another signal/channel are in a relationship of QCL, it may be indicated that it is assumable that at least one of Doppler shift, a Doppler spread, an average delay, a delay spread, and a spatial parameter (for example, a spatial reception parameter (spatial Rx parameter)) is the same (the relationship of QCL is satisfied in at least one of these) between such a plurality of different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same, and such parameter(s) (which may be referred to as a QCL parameter(s)) are described below:
- QCL type A (QCL-A): Doppler shift, Doppler spread, average delay, and delay spread
- QCL type B (QCL-B): Doppler shift and Doppler spread
- QCL type C (QCL-C): Doppler shift and average delay
- QCL type D (QCL-D): Spatial reception parameter.

A case that the UE assumes that a given control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

In the present disclosure, for example, the higher layer signaling may be any one or combination of Radio Resource Control (RRC) signaling, medium access control (MAC) signaling, broadcast information, and the like.

The MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

The physical layer signaling may be, for example, downlink control information (DCI).

A channel for which the TCI state or the spatial relation is configured (indicated) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a tracking reference signal (TRS)), and a reference signal for QCL detection (also referred to as a QRS).

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An information element of the TCI state ("TCI-state IE" of RRC) configured using higher layer signaling may include one or a plurality of pieces of QCL information ("QCL-Info"). The QCL information may include at least one of information related to the RS to have a QCL relationship (RS relation information) and information indicating a QCL type (QCL type information). The RS relation information may include information such as an index of the RS (for example, an SSB index, or a non-zero-power CSI-RS (NZP CSI-RS) resource ID (Identifier)), an index of a cell in which the RS is located, and an index of a Bandwidth Part (BWP) in which the RS is located.

In Rel-15 NR, both an RS of QCL type A and an RS of QCL type D or only an RS of QCL type A may be configured as a TCI state of at least one of a PDCCH and a PDSCH for a UE.

When a TRS is configured as the RS of QCL type A, it is assumed for the TRS, different from a reference signal for demodulation (DeModulation Reference Signal (DMRS)) of the PDCCH or the PDSCH, that the same TRS is transmitted periodically for a long time period. The UE measures the TRS and can hence calculate average delay, delay spread, and the like.

Since the UE configured with the TRS as the RS of QCL type A in the TCI state of the DMRS of the PDCCH or the PDSCH can assume that the DMRS of the PDCCH or the PDSCH and the TRS have the same QCL type A parameter (average delay, delay spread, or the like), the UE can obtain the type A parameter (average delay, delay spread, or the like) of the DMRS of the PDCCH or the PDSCH, from the measurement result of the TRS. When the UE performs channel estimation for at least one of the PDCCH and the PDSCH, the UE can use the measurement result of the TRS to perform channel estimation at higher accuracy.

The UE configured with the RS of QCL type D can determine a UE receive beam (spatial domain receive filter, UE spatial domain receive filter) by using the RS of QCL type D.

An RS having the TCI state of QCL type X may mean an RS in a relationship of QCL type X with (a DMRS of) a given channel/signal, and this RS may be referred to as a QCL source having the TCI state of QCL type X.

### (Multi-TRP)

For NR, it is studied that one or a plurality of transmission/reception points (TRPs) (multi-TRP) perform DL transmission to a UE by using one or a plurality of panels (multi-panel). It is also studied that the UE performs UL transmission to the one or plurality of TRPs.

Note that the plurality of TRPs may correspond to the same identifier (ID) or may correspond to different cell IDs. Each cell ID may be a physical cell ID (PCID, PCI) or a virtual cell ID.

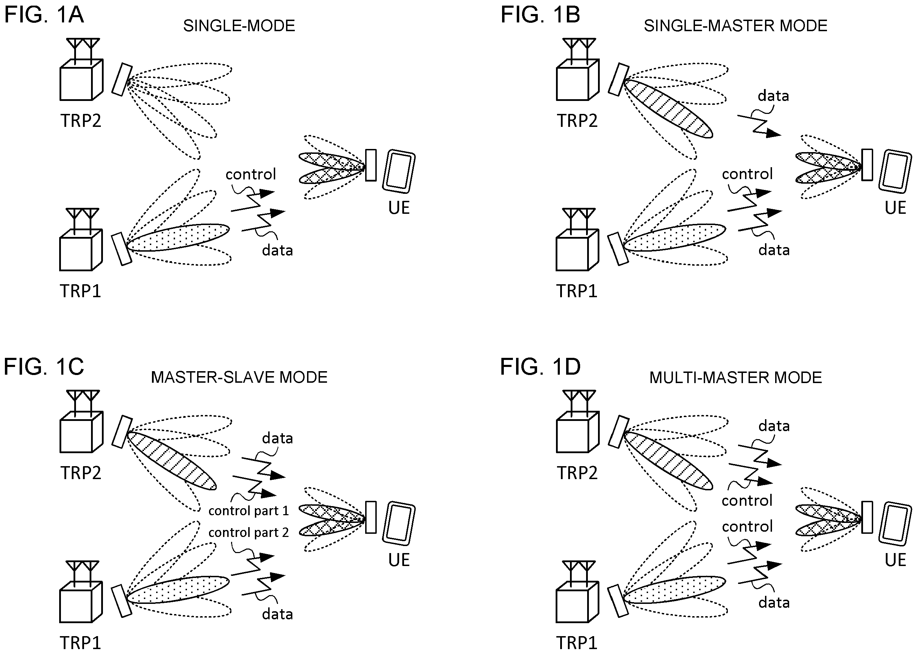

FIGS. 1A to 1D are diagrams to show examples of a multi-TRP scenario. In these examples, each TRP is assumed to be able to transmit four different beams but is not limited thereto.

FIG. 1A shows an example of a case where only one TRP (TRP 1 in this example) of the multi-TRP performs transmission to the UE (which may be referred to as a single-mode, a single TRP, and the like). In this example, TRP 1 transmits both a control signal (PDCCH) and a data signal (PDSCH) to the UE.

FIG. 1B shows an example of a case where only one TRP (TRP 1 in this example) of the multi-TRP transmits a control signal to the UE while the multi-TRP transmits data signals (which may be referred to as a single-master mode). The UE receives each PDSCH transmitted from the multi-TRP, based on one piece of downlink control information (DCI).

FIG. 1C shows an example of a case where each TRP of the multi-TRP transmits part of a control signal to the UE while the multi-TRP transmits data signals (which may be referred to as a master-slave mode). TRP 1 may transmit part 1 of the control signal (DCI) while TRP 2 may transmit part 2 of the control signal (DCI). Part 2 of the control signal may depend on part 1. The UE receives each PDSCH transmitted from the multi-TRP, based on the parts of the DCI.

FIG. 1D shows an example of a case where each TRP of the multi-TRP transmits a separate control signal to the UE while the multi-TRP transmits data signals (which may be referred to as a multi-master mode). TRP 1 may transmit a first control signal (DCI) while TRP 2 may transmit a second control signal (DCI). The UE receives each PDSCH transmitted from the multi-TRP, based on these DCIs.

When a plurality of PDSCHs from the multi-TRP (which may be referred to as a multi-PDSCH (multiple PDSCHs)) are scheduled by using one piece of DCI as in FIG. 1B, this may be referred to as single DCI (single PDCCH). When a plurality of PDSCHs from the multi-TRP are scheduled by using a plurality of DCIs as in FIG. 1D, this may be referred to as multi-DCI (multi-PDCCH (multiple PDCCHs).

From each TRP of the multi-TRP, a different codeword (Code Word (CW)) and a different layer may be transmitted. As one mode of multi-TRP transmission, non-coherent joint transmission (NCJT) is under study.

In NCJT, for example, TRP 1 performs modulation mapping on a first codeword and performs layer mapping to transmit a first PDSCH by using first precoding in a first number of layers (e.g., two layers). Moreover, TRP 2 performs modulation mapping on a second codeword and performs layer mapping to transmit a second PDSCH by using second precoding in a second number of layers (e.g., two layers).

Note that the plurality of PDSCHs (multi-PDSCH) in NCJT may be defined to partially or entirely overlap each other in at least one of the time and frequency domains. In other words, the first PDSCH from the first TRP and the second PDSCH from the second TRP may overlap each other in terms of at least one of time and frequency resources.

It may be assumed that the first PDSCH and the second PDSCH are not in a quasi-co-location (QCL) relationship (are not quasi-co-located). Multi-PDSCH reception may be interpreted as simultaneous reception of PDSCHs that are not of a given QCL type (e.g., QCL type D).

It is studied to support PDSCH (transport block (TB) or codeword (CW)) repetition over a multi-TRP in URLLC for a multi-TRP. It is studied to support schemes for repetition over a multi-TRP in the frequency domain, the layer (spatial) domain, or the time domain (URLLC schemes, for example, schemes 1, 2a, 2b, 3, and 4). In scheme 1, a multi-PDSCH from a multi-TRP is multiplexed by space division multiplexing (SDM). In schemes 2a and 2b, PDSCHs from a multi-TRP are multiplexed by frequency division multiplexing (FDM). In scheme 2a, redundancy versions (RVs) for the multi-TRP are the same. In scheme 2b, redundancy versions (RVs) for the multi-TRP may be the same or different from each other. In schemes 3 and 4, a multi-PDSCH from a multi-TRP is multiplexed by time division multiplexing (TDM). In scheme 3, the multi-PDSCH from the multi-TRP is transmitted in one slot. In scheme 4, the multi-PDSCH from the multi-TRP is transmitted in different slots.

According to such a multi-TRP scenario, more flexible transmission control using channels of higher quality is possible.

In the multi-master mode as in FIG. 1D, a configuration in which the same physical cell ID is configured for a plurality of TRPs (intra-TRP mobility, intra-cell TRP mobility, intra-cell mobility, or intra-cell multi-TRP operation) and a configuration in which different physical cell IDs are configured for a plurality of TRPs (inter-TRP mobility, inter-cell TRP mobility, inter-cell mobility, or inter-cell multi-TRP operation) are conceivable.

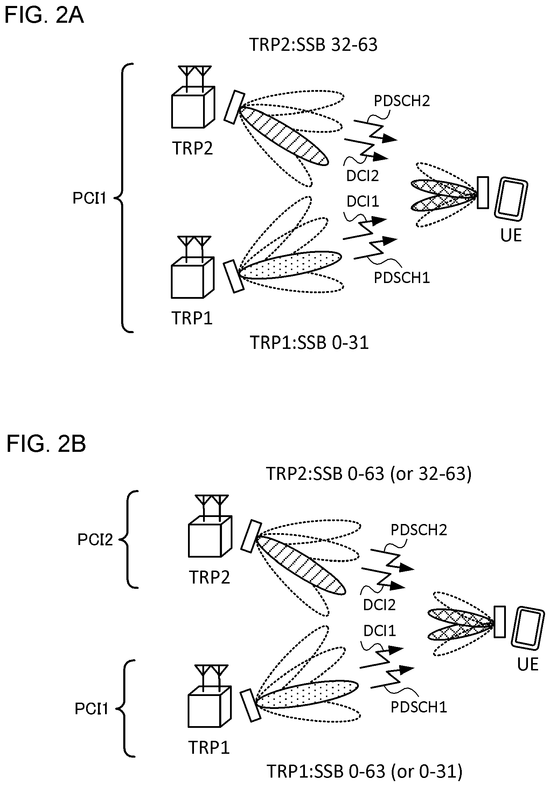

FIG. 2A is a diagram to show an example of intra-cell mobility. As shown in FIG. 2A, TRP 1 and TRP 2 are configured with the same physical cell ID (PCI 1). In this case, SSBs (SSB indices) transmitted from TRP 1 and SSBs transmitted from TRP 2 need be different from each other. In the example in FIG. 2A, the SSBs from TRP 1 are 0 to 31 while the SSBs from TRP 2 are 32 to 63.

FIG. 2B is a diagram to show an example of inter-cell mobility. As shown in FIG. 2B, TRP 1 and TRP 2 are configured with different physical cell IDs (PCI 1 and PCI 2). In this case, SSBs transmitted from TRP 1 and SSBs transmitted from TRP 2 may overlap or may be different from each other. In the example in FIG. 2B, SSBs from TRP 1 and SSBs from TRP 2 may both be 0 to 63. Alternatively, the SSBs from TRP 1 may be 0 to 31 while the SSBs from TRP 2 may be 32 to 63. In this case, an RS in the TCI state of PDSCH 1 / PDSCH 2 is PCI 1 or PCI 2.

Note that the intra-cell mobility and the inter-cell mobility are not limited to the multi-TRP configuration.

Layer-1/layer-2 (layer 1/ layer 2 (L1/L2)) inter-cell mobility to facilitate DL/UL beam management that is more efficient (achieves lower latency and overhead) is under study. For example, by assuming multi-DCI-based multi-PDSCH reception, QCL/TCI-related enhancement that enables inter-cell multi-TRP operation may be performed.

In L1/L2 inter-cell mobility, serving cell change is possible by using a function such as beam control without RRC reconfiguration. In other words, transmission and/or reception with a non-serving cell is possible without handover. For handover, RRC reconnection is needed, for example, which causes a data communication unavailable period. Hence, L1/L2 inter-cell mobility with no need of handover is preferable.

However, a C-RNTI used in the serving cell may not be able to be used directly for transmission and/or reception with a non-serving cell. This is because, for example, the C-RNTI used in the serving cell may be already used for another UE in a non-serving cell. If the same C-RNTI is used between UEs in the same cell, this causes a problem that one of the parties can read DCI for the other party in error (can solve cyclic redundancy check (CRC) scrambling of DCI to the other party in error), for example.

Hence, the inventors of the present invention came up with the idea of a method of appropriately performing transmission and/or reception of a non-serving cell. According to one aspect of the present disclosure, it is possible to achieve high-speed inter-cell mobility, for example.

Embodiments according to the present disclosure will be described in detail with reference to the drawings as follows. The radio communication methods according to respective embodiments may each be employed individually, or may be employed in combination.

Note that, in the present disclosure, "A/B" may be interpreted as "at least one of A and B."

Note that, in the present disclosure, a panel, an Uplink (UL) transmission entity, a point, a TRP, a TRP-ID, a TRP ID, a spatial relation, a control resource set (CORESET), a PDSCH, a codeword, a base station, a given antenna port (e.g., a reference signal for demodulation (DeModulation Reference Signal (DMRS) port)), a given antenna port group (e.g., a DMRS port group), a given group (e.g., a code division multiplexing (CDM) group, a given reference signal group, CORESET group), and a CORESET pool may be interpreted interchangeably. A panel Identifier (ID) and a panel may be interpreted interchangeably.

In the present disclosure, a cell, a CC, a carrier, a BWP, and a band may be interpreted interchangeably.

In the present disclosure, an index, an ID, an indicator, and a resource ID may be interpreted interchangeably.

A TCI state, a TCI state or a QCL assumption, a QCL assumption, QCL information, a QCL parameter, a spatial domain receive parameter, a UE spatial domain receive filter, a spatial domain filter, a UE receive beam, a DL receive beam, a DL precoding, a DL precoder, a DL-RS, an RS having a TCI state or QCL assumption of QCL type D, and an RS having a TCI state or QCL assumption of QCL type A may be interpreted interchangeably. An RS of QCL type D, a DL-RS associated with QCL type D, a DL-RS of QCL type D, a source of a DL-RS, an SSB, and a CSI-RS may be interpreted interchangeably.

In the present disclosure, a TCI state may be information related to a receive beam (spatial domain receive filter) (e.g., a DL-RS, a QCL-type, a cell in which a DL-RS is transmitted) indicated to (configured for) a UE. A QCL assumption may be information related to a receive beam (spatial domain receive filter) assumed by a UE (e.g., a DL-RS, a QCL-type, a cell in which a DL-RS is transmitted), based on transmission or reception of an associated signal (e.g., a PRACH).

In the present disclosure, a spatial relation, spatial relation information, a spatial relation assumption, a QCL parameter, a spatial domain transmission filter, a UE spatial domain transmission filter, a spatial domain filter, a UE transmit beam, a UL transmit beam, a UL precoding, a UL precoder, an RS having a spatial relation, a DL-RS, a QCL assumption, an SRI, a spatial relation based on an SRI, and a UL TCI may be interpreted interchangeably.

In the present disclosure, a TRS, a CSI-RS for tracking, a CSI-RS having TRS information (higher layer parameter trs-Info), and an NZP-CSI-RS resource in an NZP-CSI-RS resource set having TRS information may be interpreted interchangeably.

In the present disclosure, a beam, a spatial domain filter, a spatial setting, a TCI state, a TCI state pool, a plurality of TCI states, a UL TCI state, a unified TCI state, a unified beam, a common TCI state, a common beam, a QCL assumption, a QCL parameter, a spatial domain receive parameter, a UE spatial domain receive filter, a UE receive beam, a DL beam, a DL receive beam, a DL precoding, a DL precoder, a DL-RS, an RS having a TCI state / QCL assumption of QCL type D, an RS having a TCI state / QCL assumption of QCL type A, a spatial relation, a spatial domain transmission filter, a UE spatial domain transmission filter, a UE transmit beam, a UL beam, a UL transmit beam, a UL precoding, a UL precoder, and a PL-RS may be interpreted interchangeably. In the present disclosure, a QCL type X-RS, a DL-RS associated with QCL type X, a DL-RS of QCL type X, a source of a DL-RS, an SSB, a CSI-RS, and an SRS may be interpreted interchangeably.

In the present disclosure, a normal TRP, a single TRP, a single-TRP system, single-TRP transmission, and a single PDSCH may be interpreted interchangeably. In the present disclosure, a multi-TRP, a multi-TRP system, multi-TRP transmission, and a multi-PDSCH may be interpreted interchangeably. In the present disclosure, single DCI, a single PDCCH, a multi-TRP based on single DCI, and two TCI states in at least one TCI codepoint being activated may be interpreted interchangeably.

In the present disclosure, a single TRP, a channel using a single TRP, a channel using one TCI state / spatial relation, a multi-TRP not being enabled by RRC/DCI, a plurality of TCI states / spatial relations not being enabled by RRC/DCI, one CORESET pool index (CORESETPoolIndex) value being not configured for any CORESET and any code point of a TCI field not being mapped to two TCI states, communicating with only one transmission/reception point, and using a single TRP may be interpreted interchangeably.

In the present disclosure, a multi-TRP, a channel using a multi-TRP, a channel using a plurality of TCI states / spatial relations, a multi-TRP being enabled by RRC/DCI, a plurality of TCI states / spatial relations being enabled by RRC/DCI, and at least one of a multi-TRP based on a single piece of DCI and a multi-TRP based on multi-DCI may be interpreted interchangeably. In the present disclosure, a multi-TRP based on multi-DCI and one CORESET pool index (CORESETPoolIndex) value being configured for a CORESET may be interpreted interchangeably. In the present disclosure, a multi-TRP based on single DCI and two TCI states in at least one codepoint in a TCI field being mapped may be interpreted interchangeably.

### (Radio Communication Method)

In one embodiment of the present disclosure, a UE performs UL/DL transmission and/or reception by using a plurality of C-RNTIs.

"UL/DL transmission and/or reception" and "transmission and/or reception with a cell" in the present disclosure may be interpreted as transmission of any UL channel/signal (e.g., RS), reception of any DL channel/signal (e.g., RS), transmission of any UL channel/signal (e.g., RS) to a cell, reception of any DL channel/signal (e.g., RS) in a cell, and the like, and vice versa.

In the present disclosure, "use a C-RNTI," "use a C-RNTI to perform UL/DL transmission and/or reception," and the like may be interpreted as detecting (performing blind detection of) a PDCCH by using a C-RNTI, decoding a PDSCH by using a C-RNTI, performing scrambling for a PUCCH/PUSCH by using a C-RNTI, and the like, and vice versa. This is because a C-RNTI is used for CRC scrambling of a PDCCH (DCI), scrambling of data (information bits) of a PDSCH/PUCCH/PUSCH, and the like.

In the first embodiment, the UE retains, in addition to a C-RNTI of the serving cell (e.g., a first C-RNTI), a C-RNTI of a non-serving cell (e.g., a second C-RNTI). The UE controls transmission and/or reception with the serving cell by using the former while controlling transmission and/or reception with the non-serving cell by using the latter.

How many non-serving cells the UE assumes (how many non-serving cells the UE controls transmission and/or reception with, in other words, the number of non-serving cells with which the UE can perform transmission and/or reception) may be defined in a specification in advance, may be configured for the UE by higher layer signaling (e.g., RRC/MAC CE), or may be determined based on a UE capability.

The UE may retain/assume a C-RNTI(s) corresponding to the number of non-serving cells thus defined/configured/assumed/determined in addition to the C-RNTI of the serving cell.

The UE may use the C-RNTI of each non-serving-cell for transmission and/or reception with the non-serving cell (e.g., at least transmission and/or reception in the physical layer (detection of a PDCCH, descrambling of data of a PDSCH, and the like)).

Note that, in the present disclosure, a "C-RNTI of a non-serving cell," a "C-RNTI for a non-serving cell," an "additional C-RNTI for a non-serving cell," an "additional C-RNTI," and the like may be interpreted interchangeably.

### <Method of Configuring/Notifying Plurality of C-RNTIs (Method of Adding Additional C-RNTI for Non-serving Cell)>

The UE may notify a network (e.g., a base station) of a C-RNTI for a non-serving cell by using a MAC CE. This MAC CE may be a MAC CE different from a C-RNTI MAC CE already defined in Rel. 15/16.

Note that the C-RNTI MAC CE is a MAC CE transmitted from the UE in message 3 in a contention based random access (CBRA) procedure. The C-RNTI that the base station is notified from the UE by using the C-RNTI MAC CE (also referred to as a TC-RNTI (Temporary C-RNTI) at this point) is to be a regular C-RNTI for the UE after contention resolution.

This MAC CE, similarly to the C-RNTI MAC CE, may include a C-RNTI field of a given number (e.g., 16) of bits indicating the C-RNTI (e.g., the C-RNTI of a MAC entity). This MAC CE may include a cell ID field indicating a cell ID (e.g., a PCID (physical cell ID)) of the non-serving cell as a target.

This MAC CE may be associated with the same logical channel ID (LCID) as that of an existing C-RNTI MAC CE or may be associated with a different LCID.

Note that the UE may be configured with a candidate(s) for the C-RNTI of the non-serving cell in advance by RRC signaling. The C-RNTI field may indicate one or more C-RNTIs from among the candidate(s) (for example, may indicate the value of the index indicating which entry in the order of the candidate(s)).

In this way, by employing notification of an additional C-RNTI by a MAC CE, the UE can make notification of the C-RNTI of a non-serving cell (peripheral cell, neighbor cell) without RRC reconfiguration.

As another method of reporting an additional C-RNTI, the UE determines an additional C-RNTI and transmits information of the determined additional C-RNTI to the network. This transmission may be performed by using at least one of a PUSCH, a message 3 PUSCH, a PUCCH, and the like. The information of the additional C-RNTI may be transmitted by using at least one of a MAC CE, UCI, and the like. At this point, the additional C-RNTI may be referred to as an additional TC-RNTI.

The UE may determine the additional C-RNTI randomly or based on at least one of the C-RNTI of the serving cell and the cell ID of the non-serving cell.

The information of the additional C-RNTI may be transmitted by using a MAC CE obtained by enhancing/changing an existing C-RNTI MAC CE (which may, for example, be referred to as an enhanced C-RNTI MAC CE). The enhanced C-RNTI MAC CE may include a field for the additional C-RNTI in addition to a field for the C-RNTI of the serving cell.

The UE may confirm, when response from the base station is received, the additional TC-RNTI as the additional C-RNTI. The response may be a response for transmission including the information of the additional C-RNTI (e.g., message 4, DCI, HARQ-ACK, PDSCH) or the like.

### <Meaning of Transmission and/or Reception with Non-serving Cell>

"Transmission and/or reception of a non-serving cell" may mean that the QCL assumption / TCI state for a channel/signal to be transmitted/received is related to an RS (e.g., an SSB/CSI-RS) of the non-serving cell.

For example, this may mean a case that a PDSCH of the non-serving cell is scheduled in a similar manner as that in specifications of Rel-15/16 NR in a PDSCH resource configured by a PDSCH configuration ("PDSCH-config") configured in an RRC parameter for a given serving cell (e.g., "ServingCellConfig" indicating the configuration of the serving cell) but the QCL source for this PDSCH is related to (configured with) the non-serving cell.

The UE may assume to transmit/receive a QCL source RS in a TCI state / QCL assumption to be used, by using the additional C-RNTI for the non-serving cell for a channel/RS (e.g., a PDCCH, PDSCH, CSI-RS, TRS, PUCCH, PUSCH, SRS) related to the non-serving cell.

Note that a TCI state of a PDSCH is not explicitly indicated in some cases in Rel. 15/16. For example, when an RRC parameter indicating that a TCI field is included in DCI (tciPresentInDCI) is not configured, the UE can obtain a TCI state of a PDSCH from a TCI state of a PDCCH.

Similarly, also in the present embodiment, when a TCI state of a PDSCH is not explicitly indicated, the UE may assume to obtain QCL information from a TCI state of a PDCCH. When the TCI state of the PDCCH is related to a non-serving cell RS, the UE may then use the additional C-RNTI for the non-serving cell to transmit/receive the PDSCH.

When a QCL source RS of a TCI state of DCI (PDCCH) scheduling a PDSCH/PUSCH is related to a non-serving cell RS, the UE may use the additional C-RNTI for the non-serving cell to transmit/receive the PDSCH/PUSCH.

Note that a framework using a unified TCI (common TCI) state is planned to be introduced in Rel. 17. When a QCL source RS of a unified TCI state indicated by a MAC CE / DCI is related to a non-serving cell RS, the UE may use the additional C-RNTI for the non-serving cell to transmit/receive a channel/RS (e.g., a PDCCH, PDSCH, CSI-RS, TRS, PUCCH, PUSCH, SRS).

### <Relationships between QCL Source RSs and Non-serving Cell RSs>

Associations between the QCL source RSs and non-serving cell RSs may be configured for the UE by higher layer signaling. For example, the UE may be configured explicitly with at least one of information of whether a TCI state (or QCL source RS of a TCI state) corresponds to (an RS of) a non-serving cell and a PCI by RRC signaling, and the PCI may correspond to a PCI of the non-serving cell. This information of whether to correspond to a non-serving cell may be referred to as a non-serving cell flag, a serving cell flag, a cell flag, and the like.

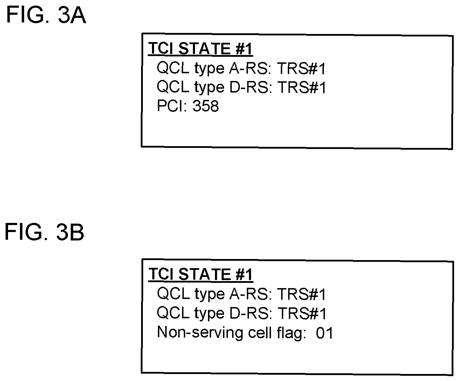

FIGS. 3A and 3B are diagrams to show examples of an RRC configuration of associations between QCL source RSs and non-serving cell RSs.

FIG. 3A shows an example where TRS #1 is configured as source RSs of QCL types A and D for TCI state #1 while the value of the PCI corresponding to this TCI state (or TRS #1) is configured to be "358." Note that the PCI may be expressed using a given number of bits (e.g., 10 bits).

In the example in FIG. 3A, TCI state #1 may mean that TRS #1 of a (non-)serving cell with a PCI being 358 (= 358) is QCL type A/D.

FIG. 3B shows an example where TRS #1 is configured as source RSs of QCL types A and D for TCI state #1 while this TCI state (or TRS #1) is configured with "01" as a non-serving cell flag.

The non-serving cell flag may be expressed using two bits, for example. Non-serving cell flag = "00" may indicate a serving cell, non-serving cell flag = "01" may indicate non-serving cell #1, non-serving cell flag = "10" may indicate non-serving cell #2, and non-serving cell flag = "11" may indicate non-serving cell #3.

When the number of non-serving cells possible to be used is small, notification of each non-serving cell flag as in FIG. 3B can reduce the number of bits for the notification of a non-serving cell compared with a case of notification of a PCI as in FIG. 3A.

Note that the UE may be separately notified of the cell ID (PCI) of the serving cell / non-serving cell corresponding to a non-serving cell flag by RRC / MAC CE.

The number of bits of a non-serving cell flag may be defined in a specification in advance (e.g., one bit), may be configured by a higher layer, or may be determined based on the number of configured cell IDs (PCIs) of the serving cell / non-serving cell(s) described above.

The number of additional C-RNTIs of the non-serving cell(s) may be determined based on at least one of the number of bits of a non-serving cell flag, the cell IDs (PCIs) of the serving cell / non-serving cell(s) and the like. For example, when the number of bits of a non-serving cell flag is one, the number of additional C-RNTIs for non-serving cells may be determined to be one, when the number of bits of a non-serving cell flag is two, the number of additional C-RNTIs for non-serving cells may be determined to be three.

According to the embodiment described above, it is possible to appropriately perform transmission and/or reception of a non-serving cell, based on an additional C-RNTI, for example. Moreover, a non-serving cell RS can be used as a QCL source. For example, even when a serving cell is changed through inter-cell mobility, a non-serving cell RS can be used directly to determine a TCI state. This can eliminate the necessity of RRC reconfiguration and the like and can hence reduce communication overhead.

### <Others>

Note that at least one of the embodiments described above may be applied only to a UE that has reported a specific UE capability or a UE that supports the specific UE capability.

The specific UE capability may indicate at least one of the following:
- whether to support a plurality of C-RNTIs (additional C-RNTIs)
- whether to support transmission and/or reception with a non-serving cell
- whether to support a QCL assumption / TCI state of a non-serving cell RS
- whether to support configuration/use of a PCI of a non-serving cell.

At least one of the above-described embodiments may be applied when the UE is configured with given information related to the above-described embodiment by higher layer signaling (when the specific information is not configured, operation of Rel. 15/16 is employed, for example) For example, the specific information may be information configuring a QCL assumption / TCI state of a non-serving cell RS, any RRC parameter for a specific release (e.g., Rel. 17), and the like.

Note that a "C-RNTI" in the present disclosure may be interpreted as any identifier (e.g., another RNTI).

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

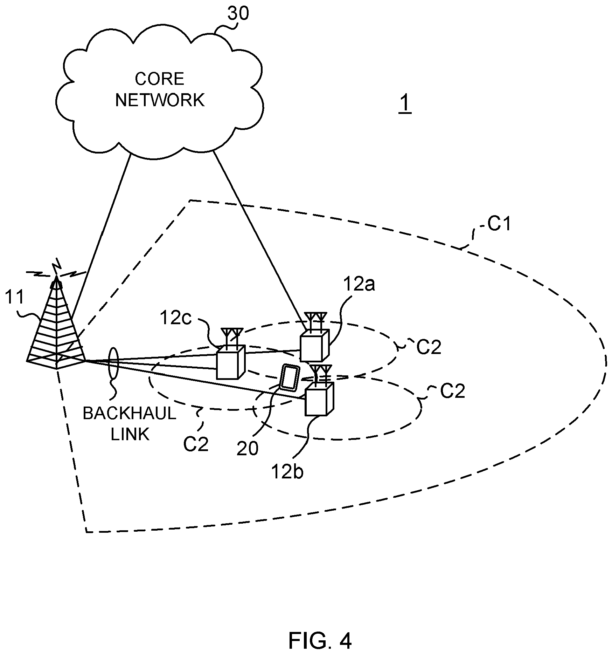

FIG. 4 is a diagram to show an example of a schematic structure of the radio communication system according to one embodiment. The radio communication system 1 may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a given search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be also referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cell-specific reference signal (CRS), a channel state information-reference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be also referred to as a "reference signal."

In the radio communication system 1, a sounding reference signal (SRS), a demodulation reference signal (DMRS), and so on may be communicated as an uplink reference signal (UL-RS). Note that DMRS may be referred to as a "user terminal specific reference signal (UE-specific Reference Signal)."

### (Base Station)

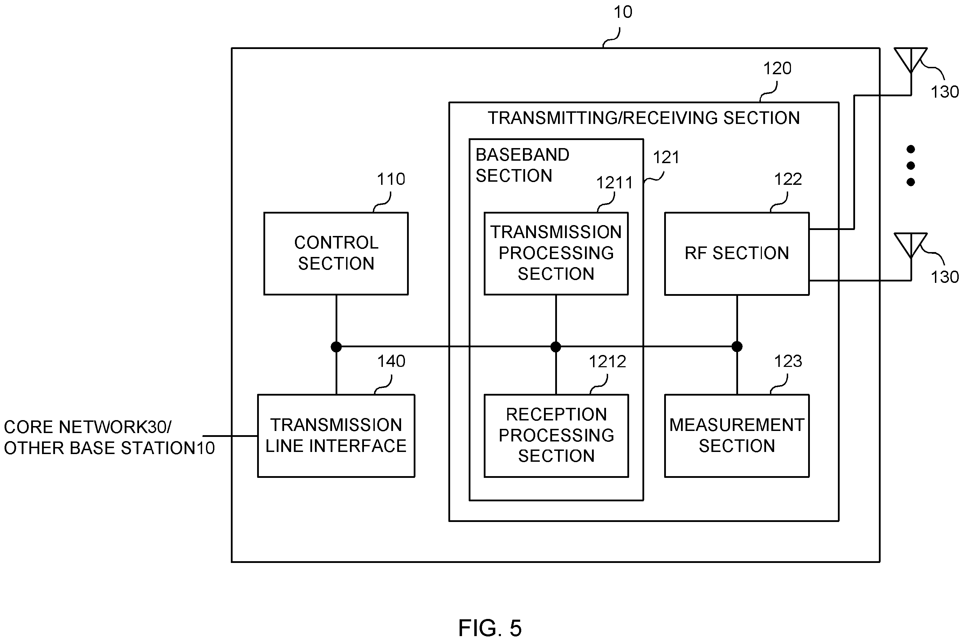

FIG. 5 is a diagram to show an example of a structure of the base station according to one embodiment. The base station 10 includes a control section 110, a transmitting/receiving section 120, transmitting/receiving antennas 130 and a communication path interface (transmission line interface) 140. Note that the base station 10 may include one or more control sections 110, one or more transmitting/receiving sections 120, one or more transmitting/receiving antennas 130, and one or more communication path interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the communication path interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analog-digital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The communication path interface 140 may perform transmission and/or reception (backhaul signaling) of a signal with an apparatus included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the communication path interface 140.

Note that the transmitting/receiving section 120 may receive information related to a plurality of cell radio network temporary identifiers (C-RNTIs). The control section 110 may perform control of transmission and/or reception using at least one of the plurality of C-RNTIs.

### (User Terminal)

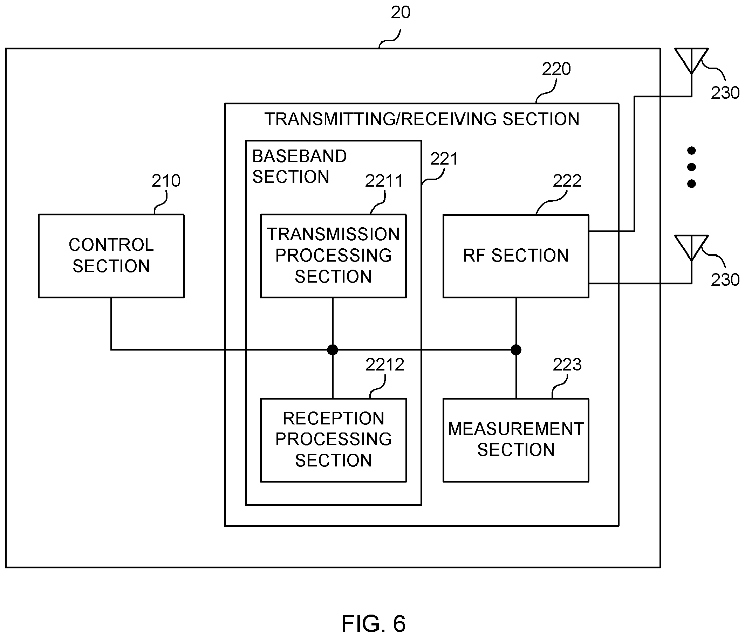

FIG. 6 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission and/or reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a given channel (for example, PUSCH), the DFT processing as the above-described transmission processing to transmit the channel by using a DFT-s-OFDM waveform if transform precoding is enabled, and otherwise, does not need to perform the DFT processing as the above-described transmission process.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply a receiving process such as analog-digital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

Note that the transmitting/receiving section 220 may transmit information related to a plurality of cell radio network temporary identifiers (C-RNTIs). The control section 210 may perform control of transmission and/or reception using (each of) the plurality of C-RNTIs.

The transmitting section 220 may transmit information related to a C-RNTI for a non-serving cell by using a Medium Access Control Control Element (MAC CE) .

The control section 210 may be configured with information indicating whether to correspond to a non-serving cell, in relation to a transmission configuration indication state (TCI state).

The control section 210 may be configured with a physical cell identifier (PCI) corresponding to a non-serving cell, in relation to a transmission configuration indication state (TCI state).

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate pieces of apparatus (for example, via wire, wireless, or the like) and using these plurality of pieces of apparatus. The functional blocks may be implemented by combining softwares into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but function are by no means limited to these. For example, functional block (components) to implement a function of transmission may be referred to as a "transmitting section (transmitting unit)," a "transmitter," and the like. The method for implementing each component is not particularly limited as described above.

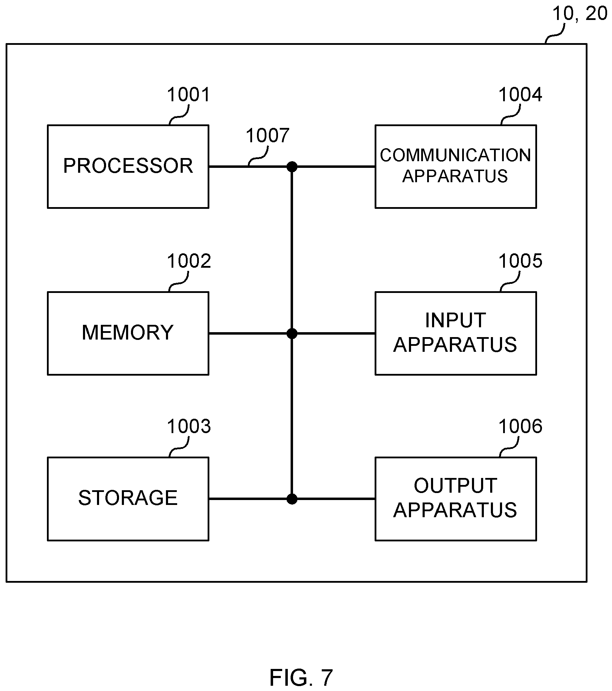

For example, a base station, a user terminal, and so on according to one embodiment of the present disclosure may function as a computer that executes the processes of the radio communication method of the present disclosure. FIG. 7 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably interpreted. The hardware structure of the base station 10 and the user terminal 20 may be configured to include one or more of apparatuses shown in the drawings, or may be configured not to include part of apparatuses.

For example, although only one processor 1001 is shown, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminals 20 is implemented, for example, by allowing given software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least part of the above-described control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least part of the operations of the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register," a "cache," a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "secondary storage apparatus."

The communication apparatus 1004 is hardware (transmitting/receiving device) for allowing inter-computer communication via at least one of wired and wireless networks, and may be referred to as, for example, a "network device," a "network controller," a "network card," a "communication module," and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the above-described transmitting/receiving section 120 (220), the transmitting/receiving antennas 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor, and so on). The output apparatus 1006 is an output device that allows sending output to the outside (for example, a display, a speaker, a Light Emitting Diode (LED) lamp, and so on). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between pieces of apparatus.

Also, the base station 10 and the user terminals 20 may be structured to include hardware such as a microprocessor, a digital signal processor (DSP), an Application Specific Integrated Circuit (ASIC), a Programmable Logic Device (PLD), a Field Programmable Gate Array (FPGA), and so on, and part or all of the functional blocks may be implemented by the hardware. For example, the processor 1001 may be implemented with at least one of these pieces of hardware.

### (Variations)

Note that the terminology described in the present disclosure and the terminology that is needed to understand the present disclosure may be replaced by other terms that convey the same or similar meanings. For example, a "channel," a "symbol," and a "signal" (or signaling) may be interchangeably interpreted. Also, "signals" may be "messages." A reference signal may be abbreviated as an "RS," and may be referred to as a "pilot," a "pilot signal," and so on, depending on which standard applies. Furthermore, a "component carrier (CC)" may be referred to as a "cell," a "frequency carrier," a "carrier frequency" and so on.

A radio frame may be constituted of one or a plurality of periods (frames) in the time domain. Each of one or a plurality of periods (frames) constituting a radio frame may be referred to as a "subframe." Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a given signal or channel. For example, numerology may indicate at least one of a subcarrier spacing (SCS), a bandwidth, a symbol length, a cyclic prefix length, a transmission time interval (TTI), the number of symbols per TTI, a radio frame structure, a particular filter processing performed by a transceiver in the frequency domain, a particular windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot." A mini-slot may be constituted of symbols less than the number of slots. A PDSCH (or PUSCH) transmitted in a time unit larger than a mini-slot may be referred to as "PDSCH (PUSCH) mapping type A." A PDSCH (or PUSCH) transmitted using a mini-slot may be referred to as "PDSCH (PUSCH) mapping type B."

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably interpreted.

For example, one subframe may be referred to as a "TTI," a plurality of consecutive subframes may be referred to as a "TTI," or one slot or one mini-slot may be referred to as a "TTI." That is, at least one of a subframe and a TTI may be a subframe (1 ms) in existing LTE, may be a shorter period than 1 ms (for example, 1 to 13 symbols), or may be a longer period than 1 ms. Note that a unit expressing TTI may be referred to as a "slot," a "mini-slot," and so on instead of a "subframe."

Here, a TTI refers to the minimum time unit of scheduling in radio communication, for example. For example, in LTE systems, a base station schedules the allocation of radio resources (such as a frequency bandwidth and transmit power that are available for each user terminal) for the user terminal in TTI units. Note that the definition of TTIs is not limited to this.

TTIs may be transmission time units for channel-encoded data packets (transport blocks), code blocks, or codewords, or may be the unit of processing in scheduling, link adaptation, and so on. Note that, when TTIs are given, the time interval (for example, the number of symbols) to which transport blocks, code blocks, codewords, or the like are actually mapped may be shorter than the TTIs.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI," a "normal subframe," a "long subframe," a "slot" and so on. A TTI that is shorter than a normal TTI may be referred to as a "shortened TTI," a "short TTI," a "partial or fractional TTI," a "shortened subframe," a "short subframe," a "mini-slot," a "sub-slot," a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))," a "sub-carrier group (SCG)," a "resource element group (REG),"a "PRB pair," an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth," and so on) may represent a subset of contiguous common resource blocks (common RBs) for given numerology in a given carrier. Here, a common RB may be specified by an index of the RB based on the common reference point of the carrier. A PRB may be defined by a given BWP and may be numbered in the BWP.

The BWP may include a UL BWP (BWP for the UL) and a DL BWP (BWP for the DL). One or a plurality of BWPs may be configured in one carrier for a UE.

At least one of configured BWPs may be active, and a UE does not need to assume to transmit/receive a given signal/channel outside active BWPs. Note that a "cell," a "carrier," and so on in the present disclosure may be interpreted as a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Also, the information, parameters, and so on described in the present disclosure may be represented in absolute values or in relative values with respect to given values, or may be represented in another corresponding information. For example, radio resources may be specified by given indices.

The names used for parameters and so on in the present disclosure are in no respect limiting. Furthermore, mathematical expressions that use these parameters, and so on may be different from those expressly disclosed in the present disclosure. For example, since various channels (PUCCH, PDCCH, and so on) and information elements can be identified by any suitable names, the various names allocated to these various channels and information elements are in no respect limiting.

The information, signals, and so on described in the present disclosure may be represented by using any of a variety of different technologies. For example, data, instructions, commands, information, signals, bits, symbols, chips, and so on, all of which may be referenced throughout the herein-contained description, may be represented by voltages, currents, electromagnetic waves, magnetic fields or particles, optical fields or photons, or any combination of these.

Also, information, signals, and so on can be output in at least one of from higher layers to lower layers and from lower layers to higher layers. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or appended. The information, signals, and so on that are output may be deleted. The information, signals, and so on that are input may be transmitted to another apparatus.

Reporting of information is by no means limited to the aspects/embodiments described in the present disclosure, and other methods may be used as well. For example, reporting of information in the present disclosure may be implemented by using physical layer signaling (for example, downlink control information (DCI), uplink control information (UCI), higher layer signaling (for example, Radio Resource Control (RRC) signaling, broadcast information (master information block (MIB), system information blocks (SIBs), and so on), Medium Access Control (MAC) signaling and so on), and other signals or combinations of these.

Note that physical layer signaling may be referred to as "Layer 1/Layer 2 (L1/L2) control information (L1/L2 control signals)," "L1 control information (L1 control signal)," and so on. Also, RRC signaling may be referred to as an "RRC message," and can be, for example, an RRC connection setup message, an RRC connection reconfiguration message, and so on. Also, MAC signaling may be reported using, for example, MAC control elements (MAC CEs).

Also, reporting of given information (for example, reporting of "X holds") does not necessarily have to be reported explicitly, and can be reported implicitly (by, for example, not reporting this given information or reporting another piece of information).

Determinations may be made in values represented by one bit (0 or 1), may be made in Boolean values that represent true or false, or may be made by comparing numerical values (for example, comparison against a given value).

Software, whether referred to as "software," "firmware," "middleware," "microcode," or "hardware description language," or called by other terms, should be interpreted broadly to mean instructions, instruction sets, code, code segments, program codes, programs, subprograms, software modules, applications, software applications, software packages, routines, subroutines, objects, executable files, execution threads, procedures, functions, and so on.

Also, software, commands, information, and so on may be transmitted and received via communication media. For example, when software is transmitted from a website, a server, or other remote sources by using at least one of wired technologies (coaxial cables, optical fiber cables, twisted-pair cables, digital subscriber lines (DSL), and so on) and wireless technologies (infrared radiation, microwaves, and so on), at least one of these wired technologies and wireless technologies are also included in the definition of communication media.

The terms "system" and "network" used in the present disclosure can be used interchangeably. The "network" may mean an apparatus (for example, a base station) included in the network.

In the present disclosure, the terms such as "precoding," a "precoder," a "weight (precoding weight)," "quasi-co-location (QCL)," a "Transmission Configuration Indication state (TCI state)," a "spatial relation," a "spatial domain filter," a "transmit power," "phase rotation," an "antenna port," an "antenna port group," a "layer," "the number of layers," a "rank," a "resource," a "resource set," a "resource group," a "beam," a "beam width," a "beam angular degree," an "antenna," an "antenna element," a "panel," and so on can be used interchangeably.

In the present disclosure, the terms such as a "base station (BS)," a "radio base station," a "fixed station," a "NodeB," an "eNB (eNodeB)," a "gNB (gNodeB)," an "access point," a "transmission point (TP)," a "reception point (RP)," a "transmission/reception point (TRP)," a "panel," a "cell," a "sector," a "cell group," a "carrier," a "component carrier," and so on can be used interchangeably. The base station may be referred to as the terms such as a "macro cell," a small cell," a "femto cell," a "pico cell," and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, the terms "mobile station (MS)," "user terminal," "user equipment (UE)," and "terminal" may be used interchangeably.

A mobile station may be referred to as a "subscriber station," "mobile unit," "subscriber unit," "wireless unit," "remote unit," "mobile device," "wireless device," "wireless communication device," "remote device," "mobile subscriber station," "access terminal," "mobile terminal," "wireless terminal," "remote terminal," "handset," "user agent," "mobile client," "client," or some other appropriate terms in some cases.

At least one of a base station and a mobile station may be referred to as a "transmitting apparatus," a "receiving apparatus," a "radio communication apparatus," and so on. Note that at least one of a base station and a mobile station may be device mounted on a moving object or a moving object itself, and so on. The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor, and the like.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)," "Vehicle-to-Everything (V2X)," and the like). In this case, user terminals 20 may have the functions of the base stations 10 described above. The words "uplink" and "downlink" may be interpreted as the words corresponding to the terminal-to-terminal communication (for example, "sidelink"). For example, an uplink channel, a downlink channel, and so on may be interpreted as a sidelink channel.

Likewise, the user terminal in the present disclosure may be interpreted as base station. In this case, the base station 10 may have the functions of the user terminal 20 described above.

Actions which have been described in the present disclosure to be performed by a base station may, in some cases, be performed by upper nodes. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

The aspects/embodiments illustrated in the present disclosure may be used individually or in combinations, which may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG) (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced based on these. A plurality of systems may be combined (for example, a combination of LTE or LTE-A and 5G, and the like) and applied.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

The term "judging (determining)" as in the present disclosure herein may encompass a wide variety of actions. For example, "judging (determining)" may be interpreted to mean making "judgments (determinations)" about judging, calculating, computing, processing, deriving, investigating, looking up, search and inquiry (for example, searching a table, a database, or some other data structures), ascertaining, and so on.

Furthermore, "judging (determining)" may be interpreted to mean making "judgments (determinations)" about receiving (for example, receiving information), transmitting (for example, transmitting information), input, output, accessing (for example, accessing data in a memory), and so on.

In addition, "judging (determining)" as used herein may be interpreted to mean making "judgments (determinations)" about resolving, selecting, choosing, establishing, comparing, and so on. In other words, "judging (determining)" may be interpreted to mean making "judgments (determinations)" about some action.

In addition, "judging (determining)" may be interpreted as "assuming," "expecting," "considering," and the like.

The terms "connected" and "coupled," or any variation of these terms as used in the present disclosure mean all direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access."

In the present disclosure, when two elements are connected, the two elements may be considered "connected" or "coupled" to each other by using one or more electrical wires, cables and printed electrical connections, and, as some non-limiting and non-inclusive examples, by using electromagnetic energy having wavelengths in radio frequency regions, microwave regions, (both visible and invisible) optical regions, or the like.

In the present disclosure, the phrase "A and B are different" may mean that "A and B are different from each other." Note that the phrase may mean that "A and B is each different from C." The terms "separate," "be coupled," and so on may be interpreted similarly to "different."

When terms such as "include," "including," and variations of these are used in the present disclosure, these terms are intended to be inclusive, in a manner similar to the way the term "comprising" is used. Furthermore, the term "or" as used in the present disclosure is intended to be not an exclusive disjunction.

For example, in the present disclosure, when an article such as "a," "an," and "the" in the English language is added by translation, the present disclosure may include that a noun after these articles is in a plural form.

Now, although the invention according to the present disclosure has been described in detail above, it should be obvious to a person skilled in the art that the invention according to the present disclosure is by no means limited to the embodiments described in the present disclosure. The invention according to the present disclosure can be implemented with various corrections and in various modifications, without departing from the spirit and scope of the invention defined by the recitations of claims. Consequently, the description of the present disclosure is provided only for the purpose of explaining examples, and should by no means be construed to limit the invention according to the present disclosure in any way.

This application is based on Japanese Patent Application No. 2021-17791 filed on February 5, 2021. The entire content of the application is incorporated herein.

## Claims

1. A terminal comprising:
a transmitting section that transmits information related to a plurality of cell radio network temporary identifiers (C-RNTIs); and
a control section that controls transmission and/or reception using the plurality of C-RNTIs.

2. The terminal according to claim 1, wherein
the transmitting section transmits information related to a C-RNTI for a non-serving cell by using a Medium Access Control Control Element (MAC CE).

3. The terminal according to claim 1 or 2, wherein
the control section is configured with information indicating whether to correspond to a non-serving cell, in relation to a transmission configuration indication state (TCI state).

4. The terminal according to claim 1 or 2, wherein
the control section is configured with a physical cell identifier corresponding to a non-serving cell, in relation to a transmission configuration indication state (TCI state).

5. A radio communication method for a terminal, the radio communication method comprising:
transmitting information related to a plurality of cell radio network temporary identifiers (C-RNTIs); and
controlling transmission and/or reception using the plurality of C-RNTIs.

6. A base station comprising:
a receiving section that receives information related to a plurality of cell radio network temporary identifiers (C-RNTIs); and
a control section that controls transmission and/or reception using at least one of the plurality of C-RNTIs.
